Europäisches Patentamt

European Patent Office    (11) Publication number:    **0 218 192**

Office européen des brevets    **A1**

(19) ·)))

(12) **EUROPEAN PATENT APPLICATION**

(21) Application number: 86113543.2    (51) Int. Cl.⁴: **B60S 1/36**

(22) Date of filing: 01.10.86

(30) Priority: 08.10.85 IT 6784685

(43) Date of publication of application:
15.04.87 Bulletin 87/16

(84) Designated Contracting States:
DE ES FR GB SE

(71) Applicant: FIAT AUTO S.p.A.
Corso Giovanni Agnelli 200
I-10135 Torino(IT)

(72) Inventor: Bona, Giovanni
Via Monte Albergian, 5
I-10048 Vinovo(IT)
Inventor: Pilone, Giuseppe
Via Monte di Pietà, 22
I-10100 Torino(IT)

(74) Representative: Bongiovanni, Guido et al
c/o Ingg. Carlo e Mario Torta Via Viotti 9
I-10121 Torino(IT)

(54) **Variable-sweep windscreen wiper for vehicles.**

(57) A windscreen wiper (1) is described of the type
in which the wiper blade support arm (4) is slidingly
mounted on an arm support member (7) which is
rotated reciprocatingly by a motor (9) in opposing
directions along an arc of predetermined width by an
articulated transmission device (11); this transmits
motion to the arm support member (7), in the form
of a casing, by way of a hollow shaft (12) idly
housing in its interior a further coaxial shaft (30)
which receives motion from said motor (9) by way of
gears (31, 32, 33) and transmits it to the arm (4) by
way of a connecting rod-crank mechanism (23, 24)
housed in the arm support member (7).

Fig. 2

EP 0 218 192 A1

## VARIABLE-SWEEP WINDSCREEN WIPER FOR VEHICLES

This invention relates to a windscreen wiper of the type in which a wiper blade support arm is slidingly mounted on an arm support member which is reciprocatingly rotated by a common motor in opposite directions along an arc of predetermined width. This type of windscreen wiper is particularly suitable for use as a single-blade windscreen wiper for wiping a large vehicle windscreen surface.

Windscreen wipers of the described type are known to generally require motors in which the direction of rotation can be reversed, in order to be able to effect the to-and-fro movement along the wiping arc. In any event, on windscreen wipers of this type it is currently impossible to use known transmission devices with periodical motion reversal as used on windscreen wipers in which the arm is fixed on the arm support member, instead of being slidable on it.

The object of the invention is to provide a windscreen wiper of simple structure and low cost, in which the arm support member is made to move radially to the axis of rotation of the arm during the wiping movement, by using a motor with a single direction of rotation. Said object is attained according to the invention by a vehicle windscreen wiper of the type comprising an arm carrying at a first end a wiper blade support member, and an arm support member rotating about an axis and slidingly carrying said arm in such a manner that this latter is angularly rigid with said arm support member but radially mobile with respect to said axis, characterised in that said arm support member is internally hollow and houses in its interior that end of said arm distant from said wiper blade support member and an operating device for said arm which connects said end of this latter to a first rotary shaft disposed coaxial to said axis and mounted idly with respect to said arm support member, said windscreen wiper further comprising a second rotary shaft mounted coaxial to but independent of said first shaft and angularly rigid with said arm support member, a common drive motor for said first and second shafts, said motor being able to rotate in only one direction, and an articulated transmission device which connects said second shaft to said common motor in order to transmit to said second shaft a reciprocating rotary movement of predetermined width.

The invention will be more apparent from the non-limiting description of one embodiment thereof given hereinafter with reference to the accompanying drawings, in which:

Figure 1 diagrammatically illustrates the operation of the windscreen wiper according to the invention;

Figure 2 is a sectional elevation of the windscreen wiper according to the invention; and

Figure 3 is a section on the line III-III of the windscreen wiper of Figure 2.

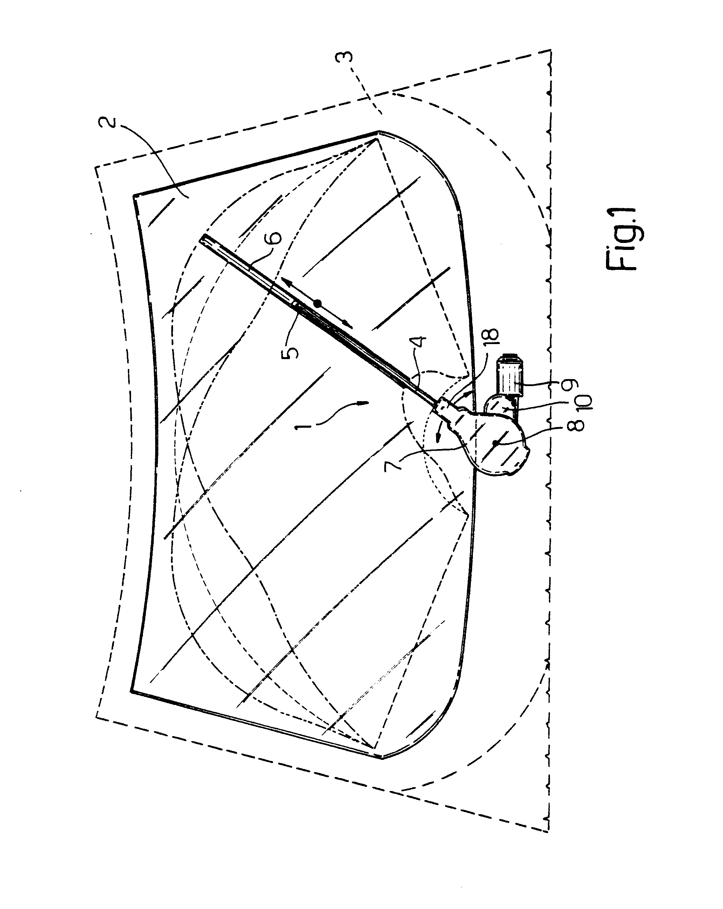

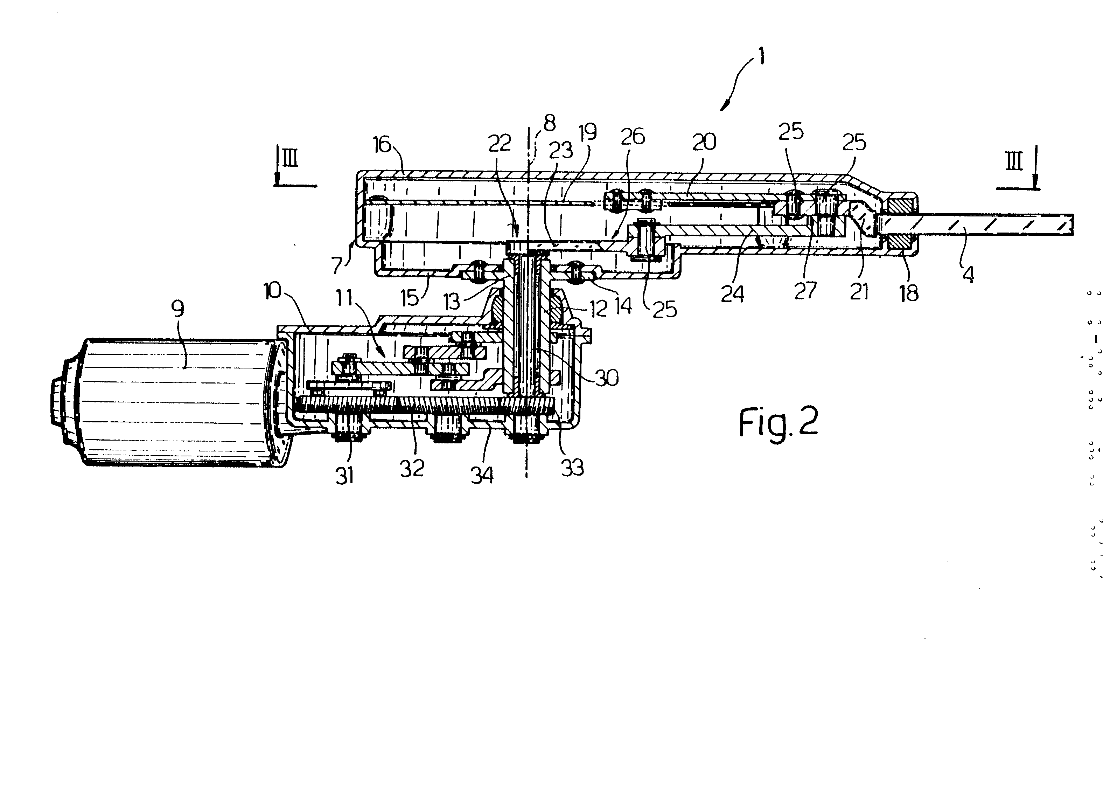

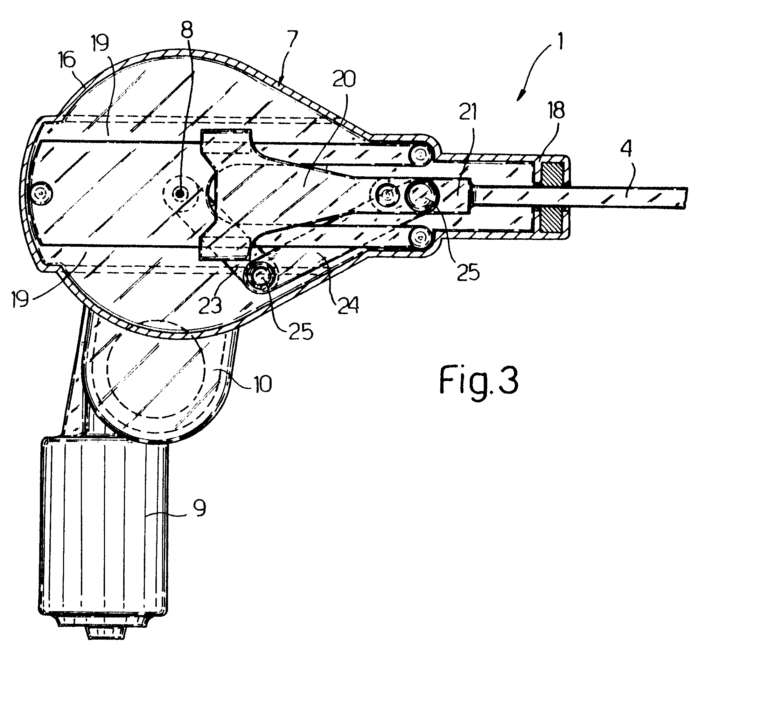

In Figures 1, 2 and 3, the reference numeral 1 indicates overall a single-blade windscreen wiper for a vehicle window, for example for the windscreen 2 of a motor vehicle 3 (Figure 1). The windscreen wiper 1 comprises an arm 4 carrying at one end 5 an arm support member 6 of known type for wiping the windscreen 2, an arm support member 7 rotating about its axis of symmetry 8 and slidingly carrying the arm 4 in such a manner that this latter is angularly rigid with the member 7 but radially mobile in the direction of the arrows - (Figure 1) with resepct to the axis 8, and a motor 9 which is common to the sliding arm 4 and rotating member 7 and is of the known single direction of rotation type normally used for operating known windscreen wipers in which the arm 4 is fixed relative to the arm support member 7. The windscreen wiper 1 also comprises (Figure 2) a casing 10 disposed below the arm support member 7 and laterally carrying the motor 9, the casing being of known type for fixing in known manner to the body of the vehicle 3 to enable the windscreen wiper 1 to be mounted thereon, and internally houses an articulated transmission device 11 comprising counter-rotating linkages and arranged to receive continuous rotary motion from the motor 9 in order to convert it into reciprocating rotary motion of predetermined amplitude and frequency, and to transmit it by way of a shaft or rotary pin 12 to the member 7. The device 11 is known and is therefore not further described for simplicity. In this respect, the group of elements comprising the casing 10, the device 11, the pin or shaft 12 and motor 9 is the same as is normally found in known windscreen wipers, in which the member 7 carrying the fixed arm 4, or the arm 4 itself, is mounted rigid with the shaft 12 by a splined connection. According to the invention the shaft 12 is in the form of a hollow sleeve carried idly by the casing 10 coaxial to the axis 8, and comprises an upper end 13 projecting perpendicularly from the casing 10. The end 13 is provided preferably with a flange 14 by which the shaft 12 is fixed in an angularly rigid manner to a lower portion 15 of the member 7, which according to the invention also consists of an internally hollow casing comprising said lower portion 15 and an upper portion 16 provided with a laterally open end 18 from which the arm 4 projects. The portion 16 is provided internally with a pair of opposing side-by-side rectilinear guides 19 perpendicular to the axis 8, and with a slide 20 mobile along the guide 19 and rigidly connected to that end 21 of the arm 4 which is distant from the end 5 and is housed inside the casing or arm support member 7 by way of the open end 18. In this manner, the arm 4 is connected in an angularly rigid manner to the member 7, while still being able to move radially with respect to the axis 8.

The lower portion 15 internally houses an operating device 22 for the arm 4, preferably of the connecting rod-crank type and comprising a crank 23 mounted rotatable about the axis 8 and a connecting rod 24 which by means of respective pins 25 with their axis parallel to the axis of the shaft 12 is hinged respectively to the upper face 26 of the crank 23 and to the lower face 27 of the arm 4 and/or slide 20. In a modification, not shown, the device 22 can be formed from any other mechanism equivalent to that described. In any event, it must be able to convert the rotary motion into translational motion and must connect the end 21 to a further rotary drive shaft 30 which, according to the invention, is mounted idly on the member 7 coaxial to the shaft 12. In particular, the shaft 30 is independent of the shaft 12, is housed idly within this latter coaxial to the axis 8, and projectingly carries the crank 23 in an angularly rigid manner. The shafts 12 and 13 both simultaneously receive motion from the common motor 9 by way of a train of gears 31, 32 and 33 carried idly in the interior of the casing 10 on the base wall 34 thereof. The gear 31 receives its motion in known manner, not shown for simplicity, from the motor 9 by way of a worm and transmits it both to the intermediate reduction gear 32, and in known manner to the device 11 which is rigidly connected directly to the gear 31. The gear 33 is angularly rigid with the shaft 30 and transmits to this latter the rotary motion which it receives from the gear 32.

With reference to Figure 1, the operation of the windscreen wiper 1 is as follows. On operating the motor 9, the gear 31 is rotated with the result that the two coaxial shafts 12 and 30 also rotate about the axis 8 but at different angular speeds depending on the transmission ratio between the gears 31 and 33. However, whereas the gear 31 and shaft 30 rotate at different speeds but always in the same direction, because of the device 11 the shaft 12 rotates reciprocatingly in the direction of the arrows to cause the member 7 to undergo harmonic to-and-fro motion ong an arc of predetermined width. As a result of this known motion of the member 7, the wiper blade support member 6 would normally be compelled to move along the trajectory indcated by thin dashed lines in Figure 1 to wipe the windscreen 2 through a circular sector having its centre on the axis 8. However, according to the invention this known movement produced in known manner by the known device 11 is supplemented by a secondary movement produced by the shaft 30. This latter on rotating its rigidly connected crank 23 moves the connecting rod 24 and consequently compels the slide 20 to move with rectilinear reciprocating motion along the guides 19, to cause the arm 4 to undergo periodic translation perpendicular to the axis 8 synchronously with the reciprocating rotation of the member 7. Consequently, the wiper blade support member 6 is subjected to a composite movement which is the sum of the known move due to the member 7 and the translational movement of the arm 4 relative to said member 7, and therefore moves along a trajectory in the shape of a figure eight shown by dashed and dotted lines in Figure 1, the reciprocating motion of the member 7 undergoing different outward and return paths, to enable the member 6 to wipe a larger region of the windscreen 2 at the upper corners thereof, where visibility is normally poorer. Obviously the shape of the trajectory followed by the member 6 can be varied at will at the design stage by simply choosing the required transmission ratio between the shaft 12 and shaft 30.

The advantages of the invention are apparent from the aforegoing description. In this respect, windscreen wipers can be obtained with a variable sweep while largely using known components and mechanisms identical to those of fixed-sweep windscreen wipers, ie in which the arm 4 does not translate perpendicular to its axis of of rotation. Moreover, as the synchronisation between the rotation and translation movements depends on the overall transmission ratio of the train of gears 31, 32, 33, in order to adapt a given windscreen wiper to operate on windscreens 2 of different shape it is necessary only to replace said gears with other similar gears having a different number of teeth. In this manner, the overall transmission ratio can be varied to cause the wiper blade support member 6 to move along a different trajectory. There is therefore the advantage of economy and constructional simplicity combined with the advantage of considerable flexibility of use, but without prejudicing wiping efficiency.

## Claims

1. A vahicle windscreen wiper (1) of the type comprising an arm (4) carrying at a first end a wiper blade support member (6), and an arm support member (7) rotating about an axis (8) and slidingly carrying said arm (4) in such a manner that this latter is angularly rigid with said arm support member (7) but radially mobile with respect to said axis (8), charcterised in that said arm support member (8) is internally hollow and houses in its interior that end of said arm (4) distant from said wiper blade support member (6) and an operating device (23, 24) for said arm (4) which connects said end of this latter to a first rotary shaft (30) disposed coaxial to said axis (8) and mounted idly with respect to said arm support member (7), said windscreen wiper (1) further comprising a second rotary shaft (12) mounted coaxial to but independent of said first shaft (30) and angularly rigid with said arm support member (7), a common drive motor (9) for said first and second shafts (30, 12), said motor (9) being able to rotate in only one direction, and an articulated transmission devi e (11) which connects said second shaft (12) to said common motor (9) in order to transmit to said second shaft (12) a reciprocating rotary movement of predetermined width.

2. A windscreen wiper (1) as claimed in claim 1, characterised in that said arm support member - (7) is constituted by a casing comprising a lower portion (15) containing s d operating device, and an upper portion (16) provided internally with a pair of opposing side-by-side rectilinear guides (19) and slidably housing a slide (20) which is mobile along said guides (19) and is rigidly connected to said end of said arm (4), this latter projecting from said casing (7) through a laterally open end (18) thereof.

3. A windscreen wiper (1) as claimed in claim 2, characterised in that aid operating device comprises a crank (23) carried angularly rigidly by said first shaft (12) and a connecting rod (24) which by means of respective pins (25) with their axis parallel to the axis of said shafts (12, 30) is hinged respectively to the upper face of said crank (23) and to the lower face of said arm (4), the axis of rotation of said shafts (12, 30) being perpendicular to said guides (19).

4. A windscreen wiper (1) as claimed in claim 2 or 3, characterised in that said second shaft (12) is constituted by a hollow sleeve idly housing in is interior said shaft (30) and terminating with a flanged end (13) fixed rigidly to said lower portion - (15) of said casing constituting said arm support member (7).

5. A windscreen wiper (1) as claimed in claim 4, characterised by comprising a second casing - (10) disposed below said arm support member (7) and laterally carrying said common motor (9), s d casing (10) internally housing said articulated transmission device (11) and carrying said second shaft (12) in an idle and partially projecting manner, and further comprising a train of gears (31, 32, 33) carried internally in an idle manner by said second casing (10) and connecting said motor (9) to said first shaft (30), said articulated transmission device (11) receiving motion from one of said gears (31, 32, 33).

Fig.1

Fig.2

0 218 192

Fig.3

0 218 192

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-C-3 405 131 (DAIMLER-BENZ) <br> * Column 2, lines 22-62; figures 1,2 * | 1 | B 60 S 1/36 |
| Y | | 2,3 | |
| A | | 4,5 | |
| | --- | | |
| Y | FR-A-2 548 605 (S.W.F.) <br> * Page 4, line 14 - page 6, line 14; page 8, lines 11-32; page 10, lines 11-24; figures 1-4,6,8 * | 2,3 | |
| A | | 1,4 | |
| | --- | | TECHNICAL FIELDS SEARCHED (Int. Cl.4) |
| Y | US-A-1 660 971 (LINDNER) <br> * Whole document * | 2,3 | |
| A | | 1,4,5 | B 60 S |
| | --- | | |
| A | DE-A-2 364 427 (BOSCH) <br> * Page 12, line 22 - page 13, line 29; figures 9,10 * | 1-3,5 | |
| | --- | | |
| A | DE-A-2 430 163 (BOSCH) <br> * Page 4, line 18 - page 6, line 21; figures 1-3 * | 1,2,5 | |
| | ---     -/- | | |

The present search report has been drawn up for all claims

| Place of search | Date of completion of the search | Examiner |
|---|---|---|
| THE HAGUE | 23-12-1986 | VERLEYE J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | FR-A-2 239 873 (BOSCH)<br>* Page 5, lines 19-31; figure 3 * | 4 | |
| | --- | | |
| P,X | GB-A-2 162 053 (S.W.F.)<br>* Whole document * | 1 | |
| P,Y | | 2 | |
| P,A | | 3-5 | |
| | ----- | | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 23-12-1986 | VERLEYE J. |